# EUROPÄISCHE PATENTSCHRIFT

(11) **EP 0 591 304 B1**
(45) Veröffentlichungstag und Bekanntmachung des Hinweises auf die Patenterteilung: **02.10.1996**
(21) Anmeldenummer: 92912842.9
(22) Anmeldetag: 25.06.1992
(51) Int. Cl.: B66C 23/00

(54) **ELEKTRONISCHE BALANCE-STEUERUNG UND -REGELUNG FÜR EIN HEBEZEUG**
ELECTRONIC BALANCE CONTROL AND REGULATION FOR LIFTING GEAR
COMMANDE ET REGULATION ELECTRONIQUES DE L'EQUILIBRE D'ENGINS DE LEVAGE

(30) Priorität: 25.06.1991 DE 4121334
(43) Veröffentlichungstag der Anmeldung: 13.04.1994
(73) Patentinhaber: STRÖDTER, Wilhelm, D-59071 Hamm (DE)
(72) Erfinder: STRÖDTER, Wilhelm, D-59071 Hamm (DE)
(74) Vertreter: Effert, Udo, Dipl.-Ing.
(86) Internationale Anmeldenummer: DE9200525
(87) Internationale Veröffentlichungsnummer: WO9300285

(56) Entgegenhaltungen:
- EP-A- 0 016 330
- EP-A- 0 035 282
- EP-A- 0 113 457
- FR-A- 2 386 473
- GB-A- 2 095 644
- US-A- 3 940 110

## Beschreibung

Die Erfindung betrifft ein Hebezeug zum manuellen Bewegen einer Last an einem schwenkbaren Ausleger.

Diese Hebezeuge oder Manipulatoren haben häufig einen Ausleger, der um eine Standsäule oder eine hängende, stationäre oder bewegbare Haltevorrichtung um 360° drehbar ist. Zusätzlich wird für eine vertikale Schwenkbewegung der Ausleger als Parallelogrammgestänge ausgeführt, um in jeder möglichen Position des Auslegers eine senkrechte Ausrichtung des Armteiles über dem Lastaufnahmemittel zu erreichen. Die statischen Eigengewichtsmomente werden durch reitende, verschiebbare Gegengewichte oder gemeinsam mit den von einer Anhängelast herrührenden Momente durch einen hydraulisch oder pneumatisch beaufschlagten Fluid-Zylinder austariert und balanciert.

Aus der DE-C 28 20 848 ist ein gattungsgemäßer Manipulator mit einem durch Handventil regulierbaren Druck in einem Fluid-Zylinder zum Ausregeln der Gewichtskräfte bekannt. Mit Hilfe des Handventiles können ein Hebe- oder Senkvorgang sowie eine Schwebestellung (Balancieren) - ohne oder mit Last - über weitere Ventile im Druckmittelkreislauf eingeleitet und arretiert werden.

Ein ähnliches pneumatisch betriebenes Gerät ist aus der DE-A 36 19 162 bekannt, bei dem mit einem handbetätigbaren Pneumatikventil von einer analogen Bewegungssteuerung des Zylinders auf eine Balanciersteuerung geschaltet werden kann. Dabei hält das System den Druck gegen einen mit Membranventilen ausgestatteten Druckluftspeicher und somit den Lastarm und die Last im Gleichgewicht. Ein Gegengewicht zur Austarierung des Eigengewichtes ist nicht offenbart.

Die DE-C 31 27 879 beschreibt ein Hebezeug mit einem als Parallelogrammgestänge ausgebildeten Ausleger, der an einem waagerechten Träger um eine vertikale und eine waagerechte Schwenkachse schwenkbar gelagert und mit einer Schwenkvorrichtung zum Hochschwenken des Auslegers verbunden ist. Eine Sicherungsvorrichtung blockiert bei einer plötzlich auftretenden großen Differenz zwischen Last- und Kraftmoment, z.B. beim unbeabsichtigten Lösen der zu bewegenden Last, selbsttätig in jeder Stellung eine Schwenkbewegung des Auslegers. Sie besteht aus einem Sicherheitsgurt und/oder einer mechanischen Bremse in dem den Ausleger betätigenden Fluid-Zylinder. Das Austarieren des Eigengewichtes des Auslegers ermöglicht ein auf einer waagerechten Trägerverlängerung hinter den Schwenkachsen reitendes, verschiebbares Gegengewicht. Die aufzunehmende Last wird durch einen mit Druckluft beaufschlagten Fluid-Zylinder, der zwischen der vertikalen Schwenkachse und dem waagerechten Träger angeordnet ist, ausbalanciert. Dazu muß ein Balancierdruck über ein Drucksteuerventil von Hand eingestellt werden.

Alle drei Systeme bedürfen einer äußerst feinfühligen Steuerung des Druckes durch einen erfahrenen Bediener, da die Fluid-Ventile alle ein Hysterese-Verhalten aufweisen. Die Geräte reagieren kaum oder sehr schwerfällig auf statischen oder dynamischen Lastwechsel bzw. müssen dann jedesmal von Hand nachgesteuert werden.

Mit der EP-A 0 069 991 ist bei einem derartigen weiterentwickelten Hebezeug vorgeschlagen worden, das Nachsteuern des Arbeitsdruckes entsprechend der aufzunehmenden Last durch ein am Ende des Auslegers unmittelbar über dem Lastaufnahmemittel angeordnetes Überlagerungssystem zu ermöglichen. Darin ist ein weiteres Parallelogrammgestänge vorgesehen, dessen Neigung zur Horizontalen über einen fliegenden Hebelarm auf ein Feinregelventil wirkt, das den Fluiddruck über Verbundleitungen zum Arbeitszylinder und zur Druckquelle steuert. Fakultativ ist angegeben, daß das Feinregelventil auch durch ein geeignetes elektrisches, hydraulisches oder pneumatisches Steuergerät ersetzt werden kann. Die Feinfühligkeit der Steuerung zur Kompensation des Lastmomentes ist u.a. abhängig von der Länge des Hebels, der das Feinregelventil betätigt, was wiederum eine relativ große Bauweise des Auslegerkopfes im Bereich des Lastaufnahmemittels bedingt. Die Regelung des Arbeitsdruckes über den Volumenstrom am Verbundleitungsende via Ventil ist relativ träge.

Das Regelventil spricht nur an, wenn und solange eine bestimmbare Initialkraft im Verhältnis zur aufzunehmenden Last aufgebracht wird und eine Überwindung des systemimmanenten Hysterese-Verhaltens gelingt. Sicherheitsgurte sollen eine Auslegerreaktion bei plötzlichem Lastabfall und anstehendem Voreinstelldruck abfangen.

Das Druckregelsystem kann wegen seiner Trägheit unter Praxisbedingungen ins Schwingen geraten, so daß ein genaues Arbeiten mit dem Hebezeug und ein Positonieren der Last Schweirigkeiten bereitet. Typische Problemfälle sind: schnelle Auslegerbewegungen, wechselnde Lasten z.B. beim Leeren eines zu hebenden Gefäßes, manuelle Bewegung der Last ohne Benutzung des Handgriffes am Ausleger.

In der EP-A-113457 ist schließlich noch ein die Last balancierendes Hebezeug offenbart, bei dem über einen Handgriff ein Kraftsensor betätigt werden kann, der die Handbewegung registriert und mit diesen Werten einen Motor ansteuert, um die Last in die gewünschte Richtung zu bewegen.

Von daher liegt der Erfindung das Problem zugrunde, für ein derartiges Hebezeug eine in unterschiedlichen praktischen Anwendungsfällen schnell und zuverlässig reagierende Regelung des Fluiddruckes vorzuschlagen und dabei definierbare Sicherheitsbedingungen einzuhalten.

Das Problem wird erfindungsgemäß durch Anspruch 1 gelöst. Weiterentwicklungen der Lösung sind in den Unteransprüchen erfaßt.

Ein elektronisches Steuer- und Regelsystem wird mit einem hydraulischen oder pneumatischen Ventil zu einer vorzugsweise elektronisch - pneumatischen Regelung des momentane erforderlichen Arbeitsdruckes benutzt. Beispielsweise kann dazu ein elektromagnetisch schaltbares Servoventil verwendet werden. Im einfachsten Falle wird das Fluid-Ventil durch ein oder mehrere Stellglieder auf die systemspezifischen Gegebenheiten wie nomineller Arbeitsdruck, Nullpunktvorgabe, d.h. Eliminierung des Hysterese-Verhaltens sowie des Verstärkungsfaktors zwischen einer Sollwertänderung und einer Arbeitsdruckänderung eingestellt. Damit ist eine Anpassung an die individuellen Eigenschaften des Hebezeuges, resultierend aus Fertigungstoleranzen, Systemreibung, Leerlauf, Tothub des Arbeitszylinders und ähnlichem im Sinne einer "Vorspannung" des Gerätes erreicht.

Ergänzt wird das System durch einen Sollwertsteller für die gerade zu transportierende, vorbestimmbare oder iterativ zu ermittelnde Last im Bereich von z.B. 5 bis 500 Kilogramm.
Der Sollwertsteller kann als analoges Gerät z.B. als Potentiometer oder als digitaler Solldrucksteller von Hand, per Funk oder beispielsweise per Infrarotsender bedient werden.

Beim Einsatz des Hebezeuges oder Manupulators insbesondere für ständig wechselnde Lastgewichte und/oder variierende Beschleunigung im Bewegungsablauf, wodurch sich Trägheitskräfte als größere Handhabungskräfte bemerkbar machen, ist eine dauernde Nachregelung des Systems selbst unter Verwendung der elektronischen Stellglieder relativ umständlich. Daher wird erfindungsgemäß der Einsatz eines Hebezeuges mit einer automatischen Waage vorgeschlagen, welche auch Gewichtsveränderungen, z.B. resultierend aus Entleeren eines Flüssigkeitsbehälters oder Auskippen eines Schrottkübels, erkennt. Eigengewichtsmomente können auch durch ein zusätzlich zum Fluidzylinder angebrachtes Gegengewicht ausgeglichen werden.

Die Waage besteht unter anderem aus einer Kraftmeßeinrichtung, die mit einem elektronischen Prozessor gekoppelt ist. Diese kann zwischen dem Auslegerende und dem Lastaufnahmemittel des Hebezeuges angebracht sein. Sie hat die Aufgabe, das Gegenstandsgewicht/die Last als auf den Ausleger ausgeübte Kraft zu ermitteln und den erfaßten Wert in eine Gegenkraft für die Ausbalancierung des Hebezeuges umzusetzen.

Der elektronische Prozessor kann beispielsweise als Stromunterbrecherschaltung, Logikschalter oder als Spannungsvergleichsschaltung ausgebildet sein. Die Kraftmeßeinrichtung kann dem jeweiligen Verwendungszweck des Hebezeuges, insbesondere auch der Art des Lastaufnahmemittels wie Kranhaken, Greifzange, Spreizdorn, Vakuumheber, Mehrfachgehänge und ähnlichem, sowie den Lastabmessungen mit gegebenenfalls differierenden Lastschwerpunkten insofern angeglichen sein, als von da aus Zug-, Druck-, Torsions- oder Biegekräfte auf den Ausleger ausgeübt werden. In der Praxis hat es sich doch gezeigt, daß die entsprechenden Sensoren für diese Kräfte auch mit in der Regel genügender Genauigkeit kombinierte Belastungen registrieren. Als Sensoren werden vorzugsweise eingesetzt: Drucksensoren, beispielsweise ein Piezo-Element; Dehnungs-Meßstreifen als Zug- und Biegesensoren; Biegebalken mit photoelektrischer Erfassung z.B. nach dem Laser-Triangulations-Prinzip.

Ein vom Sensor erzeugtes Signal wird dem elektronischen Prozessor zugeführt und dort mit dem vorherigen Istwert oder eingestellten Sollwert für die Belastung verglichen. Abweichungen zwischen dem aktuellen Signal und den vorgegebenen Werten führen zu einem Stellsignal für z.B. ein elektronisch ansteuerbares Servoventil des Druckmittelkreislaufes.

Zur Kalibrierung der Kraftmeßeinrichtung ist ein weiteres Stellglied vorgesehen, mit dem die Signalwerte für bekannte Lasten getrimmt werden, um die Wiederholgenauigkeit zu steigern. Die Kalibrierung kann in der Praxis nach längerer Einsatzdauer wiederholt werden, um eventuell zwischenzeitlich eingetretene Dehnungen von Gerätebauteilen zu kompensieren. Ebenso kann die Sensibilität der Kraftmeßeinrichtung beeinflußt werden, damit beispielsweise geringfügige Lastschwankungen negiert werden können, und eine unnötige Regelung des Arbeitsdruckes entfällt.

Eine derart geeichte Kraftmeßeinrichtung kann für vielfältige weitere Anwendungsfälle des Hebezeuges genutzt werden. Die tatsächlichen Lastgewichte können angezeigt, gespeichert und saldiert oder zur Weiterverarbeitung genutzt werden.

Dazu gehört auch die vorübergehende Speicherung des Lastwertes z.B. für den Notfall bei Stromausfall oder Druckänderung im Hydraulik- oder Pneumatiksystem. Nach Wiedereinschalten der Energie wäre der aktuelle Lastwert gespeichert, den das Gerät auszubalancieren hat.

Die Feinfühligkeit der automatischen Waage und der elektronischen Druckregelung, mit der daraus resultierenden exakten Balancierung, bewirkt beim Versuch , die Last in vertikaler Richtung zu verschieben, ein Verhalten des Hebezeuges, als wenn die Last bzw. der aufgenommene Gegenstand an einem Arm fest eingespannt wäre. Diese Funktion kann für exakte Montage, z.B. eines ausbalancierten Rades an einen PKW, genutzt werden. Auch ein geringfügiges Anheben des Gegenstandes bei einer derartigen Arbeit wird von der Kraftmeßeinrichtung als Entlastung registriert und verzögerungsfrei im Regelsystem weiterverarbeitet.

Nach dem Stand der Technik können die Hebezeuge nur bei totalem Ausfall des Antriebes in ihrem Hebe- und/oder Senkvorgang mechanisch oder durch Sperrung des Fluid-Kreislaufes blockiert werden. Das erfindungsgemäße Hebezeug kann darüber hinaus durch Bremsen für die Horizontal- oder irgendeine andere Schwenkbewegung arretiert werden. Die Dreh- und Schwenklager sind in der Regel äußerst leichtgängig ausgebildet, um möglichst wenig Reibungsverluste zu haben. Dies hat den Nachteil, daß bereits ein geringer Impuls oder ein ungenügendes manuelles Abbremsen ein umbeabsichtigtes Wegdrehen oder Weglaufen des Auslegers oder seiner Teilarme einleitet. Die Lagerstellen können deshalb erfindungsgemäß beispielsweise mit pneumatisch oder elektromagnetisch betätigbaren Bremsscheiben, Bremsbacken oder ähnlichem ausgestattet sein, die vom elektronischen Prozessor in Verbindung mit einer dafür geeigneten Sicherheitseinrichtung freigeschaltet werden.

Bekannt ist, Bremsen durch Betätigung eines Schalters in Funktion zu setzen. Bei den gattungsgemäßen Hebezeugen besteht bei Nichtbetätigung des Schalters die Gefahr des "Weglaufens" des Auslegers. Allgemein sind Bewegungssperren nach Art einer Federdruckbremse bekannt, bei denen ständiges manuelles Pressen der Feder während der Bewegung des Gerätes die Sperre gelüftet wird. Bei Loslassen der Feder greifen die Bremsen ein. Ein derartiges System würde jedoch die Handhabung des Hebezeuges erschweren.

Eine Verbesserung wird demgegenüber erfindungsgemäß erzielt, wenn ein Sensor an einem Handgriff, mit dem das Hebezeug bzw. der Ausleger geführt wird, mit den Bremsen gekoppelt ist. Der Sensor registriert die Benutzung des Handgriffes und sendet ein Signal, mit dem die Bremsen freigeschaltet werden. Der jeweilige Schaltzustand kann ebenfalls über einen elektronischen Prozessor festgestellt werden. Unabhängig von dem Prozessor werden jedoch die Bremsen bei Stromausfall oder Druckabfall im Fluid-System sicherheitshalber automatisch gesperrt. Als Sensoren werden dazu handelsübliche kapazitive Berührungssensoren oder andere Sensoren, die einen Potentialabfall registrieren, verwendet. Ebenso können Lichtschranken, Zug- oder Drucksensoren sowie Sensoren nach dem Endschalterprinzip (Näherungssensoren, Zweipunktschalter) verwendet werden.

In weiterer Ausgestaltung der Erfindung werden auch die Lastaufnahmemittel in das elektronische Regelungssystem einbezogen, um den Sicherheitsstandard des Hebezeuges zu erhöhen. Das Hebezeug wird in der Nähe oder am Handgriff mit einer Zweihandschaltung ausgerüstet. Diese steht in Wirkverbindung mit einem Sensor an einem betätigbaren Lastaufnahmemittel, z.B. einem Greifer oder Spreizdorn. Dieser Sensor kann als Positionsgeber, z.B. Endschalter, Reflexionssensor, Abstandsmeßgerät oder ähnlichem ausgebildet sein. Sofern die Last nicht in der Nähe einer Absetzfläche angekommen ist, kann sie trotz Bedienung der Zweihandschaltung nicht abgesetzt werden. Erst bei Unterschreiten eines einstellbaren Sollwertes für die Entfernung Last - Absetzfläche läßt ein elektronischer Prozessor, der mit dem Zweihandschalter und dem Sensor gekoppelt ist, ein Absetzen der Last zu,
indem das Lastaufnahmemittel z.B. ein Greifer, durch Freischalten der Energiezufuhr zum oder einer Sperre am Lastaufnahmemittel geöffnet wird.

In gleicher Weise kann ein Spannvorgang beim Aufnehmen der Last kontrolliert werden. Dazu meldet ein Kraftsensor am Lastaufnahmemittel den Spanndruck, und ein elektronischer Prozessor gibt die Bewegung des Auslegers frei.

Die Erfindung soll anhand einiger schematischer Ausführungsbeispiele näher erläutert werden. Es zeigen:
- Figur 1: eine Seitenansicht eines Hebezeuges,
- Figur 2-4: Ausführungsvarianten des erfindungsgemäßen Steuerungs- und Regelungssystemes,
- Figur 5: ein Funktionsschema eines elektronischen Nullpunktreglers,
- Figur 6: ein Funktionsschema eines elektronischen Rampenreglers.

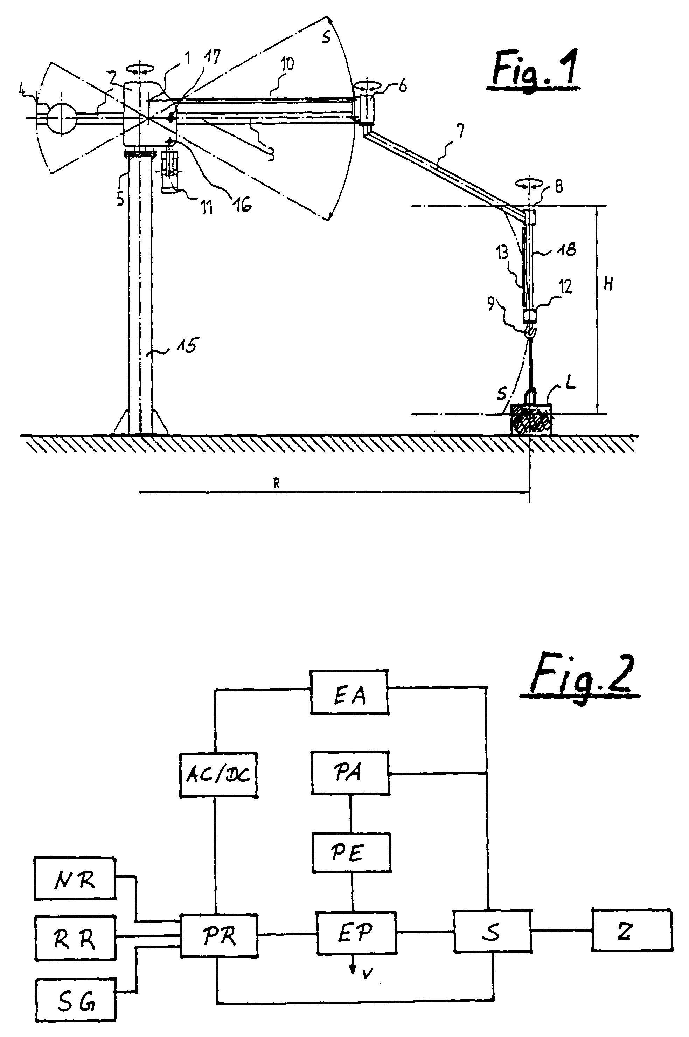

Figur 1 zeigt ein Hebezeug zum Heben und Transportieren von Gegenständen für einen Gewichtsbereich von etwa 5 bis 500 Kilogramm. Das Hebezeug arbeitet nach dem Prinzip der Balance und funktioniert in der Hubachse (Schwenkbereich S) wie eine Balkenwaage:
linksdrehendes Moment = rechtsdrehendes Moment Die Arbeitshöhe des Hebezeuges wird durch den Hubbereich H bestimmt.
In der Ebene arbeitet das Hebezeug nach dem Prinzip eines Schwenkarmes.
Die Reichweite des Hebezeuges (Arbeitsradius R) wird durch einen Schwenkbalken 7, der in einem Balkendrehlager 6 am vorderen Träger 3 rotatorisch gelagert ist, und die Länge des Trägers 3 bestimmt. Der Schwenkbalken 7 trägt ein Armdrehlager 8, in dem ein Auslegerarm 18 rotatorisch gelagert ist. Am Auslegerarm 18 ist ein Lastaufnahmemittel 9, hier als Kranhaken ausgebildet, sowie ein Handgriff 13 zur Bewegung des gesamten Auslegers befestigt. Damit das Balkendrehlager 6 und das Armdrehlager 8 und damit der Auslegerarm 18 beim Auf- oder Abschwenken immer senkrecht stehen, ist dem System noch eine Parallelstange 10 zugeordnet. Dadurch ergibt sich das Prinzip eines Parallelogramm-Auslegers.

Das gesamte Eigengewicht des am Gerätekopf 14 mit horizontal wirkendem Drehlager 5 auf der Standsäule 15 gelagerten Auslegers wird durch das Eigengewicht des Trägers 2 und das relativ zum Schwenklager 1 des Auslegers auf dem Träger 2 verschiebbar gelagerte Gegengewicht 4 ausgeglichen.

Der Ausleger samt Lastaufnahmemittel 9 oder Werkzeug ist dadurch in Balance und nach allen Richtungen frei beweglich. Durch Anhängen einer Last L an den Kranhaken wird die Balance aufgehoben und die Auslegerseite sackt nach unten. Damit die Last L transportiert werden kann, muß der Ausleger samt Last L in Balance versetzt werden. Dieses wird durch eine Hilfskraft erreicht, indem ein Pneumatikzylinder 11, an Gerätekopf 14 im Drehpunkt 16 befestigt, den Träger 3 im Drehpunkt 17 mit der nötigen Kraft unterstützt. Bei unterschiedlichen Lastmomenten wird die Hilfskraft mittels elektronisch-pneumatischer Druckregelung abgeglichen. Zwischen dem Auslegerarm 18 und dem Lastaufnahmemittel 9 ist eine Kraftmeßeinrichtung 12 angeordnet.

Die Figuren 2 bis 4 zeigen verschiedene mögliche Ausführungsformen des elektronischen Steuerungs- und Regelungssystems in schematischer Darstellung. Ein elektronischer Prozessor PR mit angeschlossenem Nullpunktregler NR und Rampenregler RR wird von einem Elektroanschluß EA über einen Wandler AC/DC mit Strom versorgt. Der elektronische Teil umfaßt neben den elektronischen Stellgliedern noch eine elektromagnetische Stelleinrichtung für ein pneumatisches Servoventil EP, das seinerseits über einen Pneumatikanschluß PA und einen Regler PE für die Druckvoreinstellung sowie die Aufbereitung der Druckluft beaufschlagt wird. über dieses Ventil wird ein Pneumatik-Zylinder Z beaufschlagt. Sowohl der Elektroanschluß als auch der Druckmittelanschluß sind auf ein beispielsweise als Ventil oder elektrischer Schalter ausgebildetes Sicherheitssystem S geschaltet, das bei Ausfall der Elektroenergie oder des Druckmittels den Pneumatikkreislauf und/oder den Stromfluß sperren. Außerdem hat das Servo-Ventil EP noch einen überdruckanschluß V.

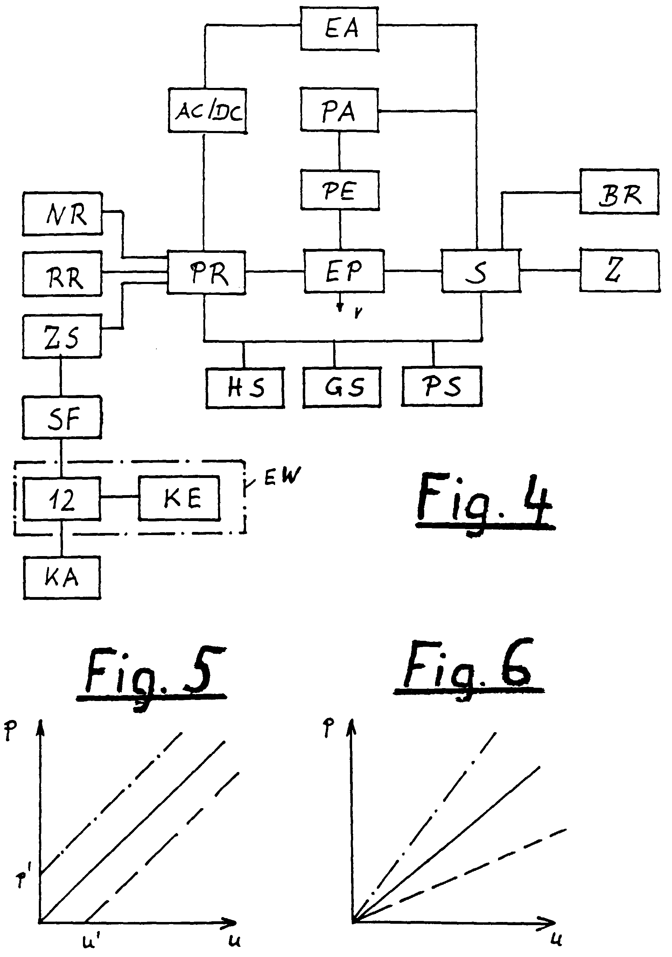

Figur 5 zeigt die Funktion des Nullpunktreglers. Aufgetragen ist die einstellbare Spannung u in Abhängigkeit vom einstellbaren Initial-Druck p der im Pneumatiksystem herrscht. Es kann mit dem Nullpunktregler NR also bereits eine Spannung u' eingestellt werden, wenn noch kein Fluid-Druck herrscht bzw. ein Druck p' vorgegeben werden bei einer Spannung u = 0, um so das Hysterese-Verhalten des Systems zu steuern.

Figur 6 zeigt die Funktionsweise des Rampenreglers RR. Aufgetragen ist wiederum die Spannung u in Abhängigkeit vom Anstieg des Druckes p im System. Der Rampenregler gibt also praktisch den Verstärkungsfaktor vor. Sowohl Nullpunktregler NR als auch Rampenregler RR lassen eine individuelle Einstellung des Regelsystems entsprechend den Erfordernissen des jeweiligen Hebezeuges zu, d.h. in Abhängigkeit von Reibungsverlust, Spiel und ähnlichen Unvollkommenheiten des Hebezeuges wird das elektronisch-pneumatische Ventil EP vorgesteuert, so daß der Arbeitsdruck im System feinfühlig nachgeregelt werden kann.

Figur 2 zeigt weiterhin einen Sollwertgeber SG, mit dem der Arbeitsdruck direkt geregelt werden kann. In dem dargestellten Falle handelt es sich bei dem Sollwertgeber um ein Potentiometer, das mit einer Skala für die Sollwerteinstellung versehen ist.

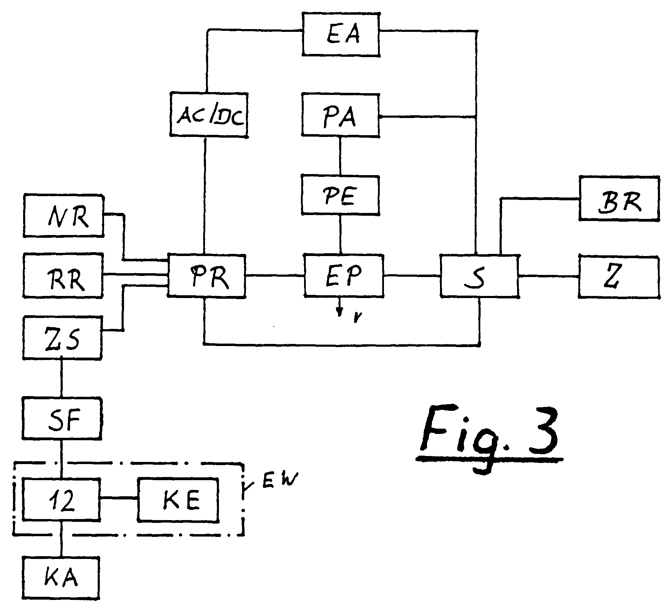

Figur 3 zeigt ein Steuerungs- und Regelungssystem analog zu Figur 2, jedoch ist der Sollwertgeber SG durch andere Schalteinheiten ersetzt worden. Ein elektronischer Prozessor PR wird von einer Kraftmeßeinrichtung 12 einer automatischen Waage EW beaufschlagt. Die Kraftmeßeinrichtung 12 weist eine Kalibriereinheit KE auf, mit der die Kraftmeßeinrichtung mit Hilfe bekannter Lasten geeicht werden kann. Die Kraftmeßeinrichtung 12 ist außerdem mit einer Anzeige für den Lastmeßwert KA verbunden, so daß das tatsächliche Gewicht der aufgenommenen Last angezeigt werden kann. Um eine Nachregelung des Regelsystems bewußt zu blockieren vermeiden, kann zum Beispiel beim Transport von Serienteilen mit identischen Gewichten eine Sollwertfixierung SF vorgenommen und danach das System so gesteuert werden, daß nur noch außerhalb vorgegebener Grenzwerte eine Nachregelung des Systems erfolgt. Die Sollwertfixierung SF kann beispielsweise nach dem ersten Wiegen einer Last eingestellt werden. Andererseits ermöglicht die Sollwertfixierung SF ein Bewegen der Last L in vertikaler Richtung zum Beispiel durch Einleiten einer Bewegungskraft, was bei einem System ohne Sollwertfixierung SF nicht möglich ist. Diese Funktion wird bei speziellen Montagen, bei denen in vertikaler Richtung feinfühlig rangiert oder an der Last L selbst manipuliert werden muß, ausgenutzt. Außerdem dient die Sollwertfixierung SF als Meßwertspeicher für den Fall, daß die Energie zu dem elektronisch-pneumatischen Prozessor PR oder Ventil EP unterbrochen wird.

Additiv zu dem Steuerungs- und Regelungssystem gemäß Figur 3 oder alternativ dazu kann das System mit einzelnen und mehreren der Schaltfunktionen gemäß Figur 4 ausgerüstet sein. Diese Schaltfunktionen dienen im wesentlichen der Verbesserung der Bediensicherheit des Hebezeuges. Figur 4 zeigt die Wirkverbindungen des Prozessors PR zu den verschiedenen Sicherheits- einrichtungen. Eine dieser Sicherheitseinrichtungen besteht aus Bremsen BR für eines oder mehrere der Schwenk- oder Drehlager 1,5,6,8 des Hebezeuges. Ein Sensor HS an dem Handgriff 13 zur Bedienung des Auslegerarmes 18 erzeugt ein Freigabesignal für den elektronischen Prozessor PR und das Sicherheitssystem S. Bei Energieausfall oder Nichtberühren des Sensors HS sperrt das Sicherheitssystem S den Fluid-Kreislauf zum Zylinder Z und den Energiefluß zu den Bremsen BR. Bei Stromausfall sperrt das Sicherheitssystem S alle Gerätefunktionen in der Art, daß der Zustand, das heißt die momentane Hebezeug- und Lastposition sowie die momentan eingestellten Systemparameter, vor dem Stromausfall eingefroren wird.
In einer ergänzenden Ausführungsform des Hebezeuges mit dem Positionsgeber PS für ein Lastaufnahmemittel 9 dieser das Sicherheitssystem S und den Prozessor PR freischalten und somit eine Last L abgesetzt werden, wobei die Funktionskontrolle von dem elektronischen Prozessor PR übernommen wird. Gleiches gilt für die Wirkverbindung zwischen dem Prozessor PR, dem Sicherheitssystem S und dem Kraftsensor GS in einem als Greifer ausgebildeten Lastaufnahmemittel 9. Erst wenn der Kraftsensor GS seinen Sollwert erreicht, kann ein Signal zum Ausgleich der Lastmomente freigegeben werden.
Dieses Auslösen eines Signales zum Ausgleich der wirkenden Momente durch Änderung des Arbeitsdruckes kann nur durch ein anschließendes gewolltes Betätigen einer Zusatzeinrichtung , beispielsweise einer Zweihandschaltung ZS (Fig.3,4), in Verbindung mit dem Positionsgeber PS geschehen.

## Patentansprüche

1. Hebezeug zum bedienungssicheren manuellen Bewegen einer Last (L) an einem schwenkbaren Ausleger (3, 6, 7, 8 10, 18), wobei Eigengewichts- und Lastmomente durch einen druckbetätigten Fluid-Zylinder (11) mit Hilfe von Reglern für einen Arbeitsdruck im Zylinder (11) ausbalanciert werden, wobei ein elektronisches Steuer- und Regelsystem für den momentan erforderlichen Arbeitsdruck von einer zwischen einem Auslegerarm (18) und einem Lastaufnahmemittel (9) angeordneten Kraftmeßeinrichtung (12) beaufschlagbar ist.

2. Hebezeug nach Anspruch 1, gekennzeichnet durch ein zusätzliches, Eigengewichtsmomente ausgleichendes Gegengewicht (4).

3. Hebezeug nach Anspruch 1 oder 2, dadurch gekennzeichnet, daß das Steuer- und Regelsystem einen elektronischen Prozessor (PR) umfaßt, vorzugsweise zur Ansteuerung eines Fluid-Ventils (EP).

4. Hebezeug nach Anspruch 1, 2 oder 3, gekennzeichnet durch Mittel (NR, RR, SG) zur elektronischen Einstellung von Systemparametern für den Sollwert des Arbeitsdruckes sowie deren Verhältnis zu Volumenstrom und/oder Arbeitsdruck.

5. Hebezeug nach einem der Ansprüche 1 bis 4, dadurch gekennzeichnet, daß die Kraftmeßeinrichtung (12) mindestens ein Mittel zur Erfassung von Zug-, Druck-, Torsions- oder Biegekräften, die von der Last (L) auf den Auslegerarm (18) ausgeübt werden, sowie Mittel zum Bilden eines den Kräften entsprechenden elektrischen Signales und Mittel zum Leiten des Signales an den Prozessor (PR) aufweist.

6. Hebezeug nach einem der Ansprüche 1 bis 5, gekennzeichnet durch eine Kalibriereinrichtung (KE) für die Kraftmeßeinrichtung (12).

7. Hebezeug nach einem der Ansprüche 1 bis 6, gekennzeichnet durch von dem Prozessor (PR) betätigbare Sicherheitseinrichtungen für die Blockierung der Hebezeugfunktionen.

8. Hebezeug nach einem der Ansprüche 1 bis 7, dadurch gekennzeichnet, daß die Sicherheitseinrichtung Mittel (S, BR) zur Behinderung von Bewegungen von einem oder mehreren Dreh- und Schwenklagern (1, 5, 6, 8) am Hebezeug umfaßt.

9. Hebezeug nach einem der Ansprüche 1 bis 8, dadurch gekennzeichnet, daß der Prozessor (PR) mit einem ein elektrisches Signal erzeugenden Sensor (HS) an einem Handgriff (13) zur Bedienung des Auslegerarmes (18) verbunden ist.

10. Hebezeug nach einem der Ansprüche 1 bis 9, dadurch gekennzeichnet, daß der Prozessor (PR) mit einem Positionsgeber (PS) für die Stellung des Lastaufnahmemittels (9) verbunden ist.

11. Hebezeug nach einem der Ansprüche 1 bis 10, dadurch gekennzeichnet, daß der Prozessor (PR) mit einem Kraftsensor (GS) in einem als Greifer ausgebildeten Lastaufnahmemittel verbunden ist.

12. Hebezeug nach einem der Ansprüche 1 bis 11, gekennzeichnet durch geeignete Mittel (ZS) zur Unterbrechung des der Kraft entsprechenden Signales.

13. Hebezeug nach einem der Ansprüche 1 bis 12, dadurch gekennzeichnet, daß die Kraftmeßeinrichtung (12) als automatische Waage für die tatsächlichen Lastgewichte ausgebildet und daß das der Kraft entsprechende elektrische Signal ein Lastmeßwert (KA) ist.

14. Hebezeug nach einem der Ansprüche 1 bis 13, gekennzeichnet durch einen Speicher (SF) für das der Kraft entsprechende Signal.

## Claims

1. Lifting apparatus for the operationally reliable, manual movement of a load (L) on a pivotable jib (3, 6, 7, 8, 10, 18), inherent weight and load moments being balanced-out by a pressure-actuated fluid cylinder (11) by means of regulators for a working pressure in the cylinder (11), and an electronic controlling and regulating system for the instantaneously required working pressure being able to be acted upon by a force measuring arrangement (12) disposed between a jib arm (18) and a load receiving means (9).

2. Lifting apparatus according to claim 1, characterised by an additional counterweight (4), which compensates for inherent weight moments.

3. Lifting apparatus according to claim 1 or 2, characterised in that the controlling and regulating system includes an electronic processor (PR), preferably to actuate a fluid valve (EP).

4. Lifting apparatus according to claim 1, 2 or 3, characterised by means (NR, RR, SG) for electronic adjustment of system parameters for the desired value of the working pressure and their ratio to volume flow and/or working pressure.

5. Lifting apparatus according to one of claims 1 to 4, characterised in that the force measuring arrangement (12) has at least one means for the detection of tensile, pressure, torsional or bending forces, which are exerted upon the jib arm (18) by the load (L), as well as means for forming an electrical signal, which corresponds to the forces, and means for conducting the signal to the processor (PR).

6. Lifting apparatus according to one of claims 1 to 5, characterised by a calibration arrangement (KE) for the force measuring arrangement (12).

7. Lifting apparatus according to one of claims 1 to 6, characterised by safety arrangements, which are actuatable by the processor (PR), for the blocking of the hoist functions.

8. Lifting apparatus according to one of claims 1 to 7, characterised in that the safety arrangement includes means (S, BR) for preventing movements of one or more rotary and pivot bearings (1, 5, 6, 8) on the hoist.

9. Lifting apparatus according to one of claims 1 to 8, characterised in that the processor (PR) is connected to a sensor (HS), which produces an electrical signal, on a handle (13) for operating the jib arm (18).

10. Lifting apparatus according to one of claims 1 to 9, characterised in that the processor (PR) is connected to a position transmitter (PS) for the position of the load receiving means (9).

11. Lifting apparatus according to one of claims 1 to 10, characterised in that the processor (PR) is connected to a force sensor (GS) in a load receiving means, which is configured as a grab.

12. Lifting apparatus according to one of claims 1 to 11, characterised by suitable means (ZS) for interrupting the signal corresponding to the force.

13. Lifting apparatus according to one of claims 1 to 12, characterised in that the force measuring arrangement (12) is configured as an automatic balance for the actual loading weights, and in that the electrical signal, corresponding to the force, is a measured load value (KA).

14. Lifting apparatus according to one of claims 1 to 13, characterised by a memory (SF) for the signal corresponding to the force.

## Revendications

1. Engin de levage destiné au déplacement manuel à manoeuvre sûre d'une charge (L) sur un bras pivotant (3, 6, 7, 8, 10, 18), les moments de poids propre et de charge étant compensés par un vérin hydraulique (11) actionné par pression à l'aide de régulateurs de la pression de service dans le vérin (11), un système de commande et de régulation électronique pouvant être sollicité pour la pression de service instantanée requise à partir d'un dispositif de mesure de force (12) disposé entre une potence (18) et des moyens de levage de charge (9).

2. Engin de levage selon la revendication 1, caractérisé par un contrepoids (4) supplémentaire compensant les moments de poids propre.

3. Engin de levage selon la revendication 1 ou 2, caractérisé en ce que le système de commande et de régulation comprend un processeur électronique (PR), de préférence pour la commande d'une soupape hydraulique (EP).

4. Engin de levage selon la revendication 1, 2 ou 3, caractérisé par des moyens (NR, RR, SG) destinés au réglage électronique des paramètres du système pour la valeur de consigne de la pression de service ainsi que de ses rapports au débit et/ou à la pression de service.

5. Engin de levage selon l'une quelconque des revendications 1 à 4, caractérisé en ce que le dispositif de mesure de force (12) présente au moins des mbyens pour détecter les forces de traction, de pression, de torsion ou de cintrage, qui sont exercées sur la potence (18) par la charge (L), de même que des moyens pour former un signal électrique correspondant aux forces et des moyens pour conduire le signal jusqu'au processeur (PR).

6. Engin de levage selon l'une quelconque des revendications 1 à 5, caractérisé par un dispositif de calibrage (KE) destiné au dispositif de mesure de la force (12).

7. Engin de levage selon l'une quelconque des revendications 1 à 6, caractérisé par des dispositifs de sécurité pouvant être actionnés par le processeur (PR) destinés à bloquer le fonctionnement de l'engin de levage.

8. Engin de levage selon l'une quelconque des revendications 1 à 7, caractérisé en ce que le dispositif de sécurité comprend des moyens (S, BR) destinés à empêcher les déplacements d'un ou plusieurs paliers rotatifs ou pivotants (1, 5, 6, 8) de l'engin de levage.

9. Engin de levage selon l'une quelconque des revendications 1 à 8, caractérisé en ce que le processeur (PR) est relié à un capteur (HS) générant un signal électrique à une poignée (13) destinée à la manoeuvre de la potence (18).

10. Engin de levage selon l'une quelconque des revendications 1 à 9, caractérisé en ce que le processeur (PR) est relié à un bloc positionneur (PS) destiné au positionnement des moyens de levage de charge (9).

11. Engin de levage selon l'une quelconque des revendications 1 à 10, caractérisé en ce que le processeur (PR) est relié à un capteur de force (GS) dans des moyens de levage de charge construits comme un grappin.

12. Engin de levage selon l'une quelconque des revendications 1 à 11, caractérisé par des moyens appropriés (ZS) destinés à l'interruption du signal correspondant à la force.

13. Engin de levage selon l'une quelconque des revendications 1 à 12, caractérisé en ce que le dispositif de mesure de force (12) est construit comme une balance automatique pour les poids de charge effectifs et en ce que le signal électrique correspondant à la force est une valeur de mesure de charge (KA).

14. Engin de levage selon l'une quelconque des revendications 1 à 13, caractérisé par une mémoire (SF) destinée au signal correspondant à la force.
